# EUROPEAN PATENT SPECIFICATION

(11) **EP 1 000 510 B1**
(45) Date of publication and mention of the grant of the patent: **28.11.2001**
(21) Application number: 98939105.7
(22) Date of filing: 28.07.1998
(51) Int. Cl.: H04N 7/167

(54) **MECHANISM AND APPARATUS FOR ENCAPSULATION OF ENTITLEMENT AUTHORIZATION IN CONDITIONAL ACCESS SYSTEM**
VERFAHREN UND VORRICHTUNG ZUR EINKAPSELUNG DER ZUGRIFFSBERECHTIGUNG IN EINEM SYSTEM MIT BEDINGTEM ZUGANG
MECANISME ET APPAREIL POUR L'ENCAPSULATION D'AUTORISATION DE PRESTATION DANS UN SYSTEME D'ACCES CONDITIONNEL

(30) Priority: 01.08.1997 US 54578 P; 08.07.1998 US 111958
(43) Date of publication of application: 17.05.2000
(73) Proprietor: Scientific-Atlanta, Inc., Lawrenceville, GA 30044 (US)
(72) Inventor: DEFREESE, Darryl, L., Lawrenceville, GA 30044 (US); SEAMAN, Jeffrey, M., Lilburn, GA 30047 (US); WASILEWSKI, Anthony, J., Alpharetta, GA 30202 (US)
(74) Representative: Kügele, Bernhard
(86) International application number: US9815639
(87) International publication number: WO9907151

(56) References cited:
- EP-A- 0 679 028
- EP-A- 0 762 765
- EP-A- 0 763 936
- EP-A- 0 782 332
- WO-A-97/16924
- WO-A-97/24832
- US-A- 5 420 866

## Description

### BACKGROUND OF THE INVENTION

### Field of the Invention

The present invention relates to a conditional access system such as a conditional access cable television system. In particular, the invention relates to identification of packages of bundled services, called entitlement units, and the authorization of reception of an entire entitlement unit. A method of determining whether a terminal is authorized to receive selected services according to the preamble of claim 1 is known from the document US-A-5 420 866, in the name of the present applicant.

### Description Of Related Art

Known conditional access systems individually authorize each service to be received. For example, a subscriber of a cable television system may subscribe to a plurality of services (e.g., HBO, Cinemax, ShowTime, etc.).

Known conditional access systems provide services to subscribers in tiers. Tiers are used as a way to provide standard service to some subscribers while providing premium services to other subscribers. Each subscriber is assigned to a specific tier. For example, consider a service that provides two tiers: a standard service that carries over the air broadcast programs and a premium service that carries the standard service plus HBO, Cinemax and ShowTime. Tier authorization data is transmitted from the system's headend to a home communication terminal for each subscriber where it is stored. In this example, the tier authorization data may be a single bit set to indicate premium service and cleared to indicate standard service. In general, many tiers (e.g., 256) may be provided. The tier authorization data may be a number (e.g., from 0 to 255) that indicates the authorized tier. Each tier corresponds to a specific combination of authorized programs out of a list of available programs (e.g., out of 128 available programs). Alternatively, the tier authorization data may be a long data word (e.g., 128 bits or 16 bytes of 8 bit each) where each bit in the tier authorization data corresponds to an authorized program. The tier authorization data in this example is merely the long data word with as many bits set as there are authorized programs for the tier, and the identification of the authorized programs is by noticing the bit position that is set.

No matter how the tier authorization data is encoded, it is transmitted from the headend to a subscriber's home communication terminal. Each subscriber is authorized for a particular tier. A table that relates the tier authorization data for each subscriber to the correspondingly identified home communication terminal is stored in the headend. For each subscriber, the headend prepares a unique addressed message containing the tier authorization data corresponding to the subscriber, and the headend transmits the data to the subscriber's home communication terminal. Often the data is encrypted by the headend and decrypted by the home communication terminal.

Programs broadcast from the headend are identified by frequency, channel number, digital data stream number, etc. The home communications terminal processes a subscriber's request for a particular program by determining a number associated with the requested program and verifying that the terminal is authorized to receive a tier that "contains" the program.

Thus, the present invention concerns a method of determining whether a terminal of a conditional access system in which a user selects a service, the selected service being associated with a frequency and the terminal having a tuner, is authorized to receive the selected service as defined in the appended claims.

The present invention also concerns a corresponding apparatus as further defined in the claims.

### BRIEF DESCRIPTION OF DRAWINGS

The invention will be described in detail in the following description of preferred embodiments with reference to the following figures wherein:
FIG. 1 is a block diagram of the communication system according to the invention;
FIG. 2 is a block diagram of a terminal according to the invention;
FIG. 3 is a block diagram of a processor of the terminal according to the invention;
FIG. 4 is a format diagram of a packetized data transport stream (a multiplex) as processed by the invention;
FIG. 5 is a flow chart of a method of determining whether a service is authorized according to the invention;
FIG. 6 is a flow chart of a method of pre-confirming authorization; and
FIG. 7 is a flow chart of a method of post-confirming authorization.

### DETAILED DESCRIPTION OF PREFERRED EMBODIMENTS

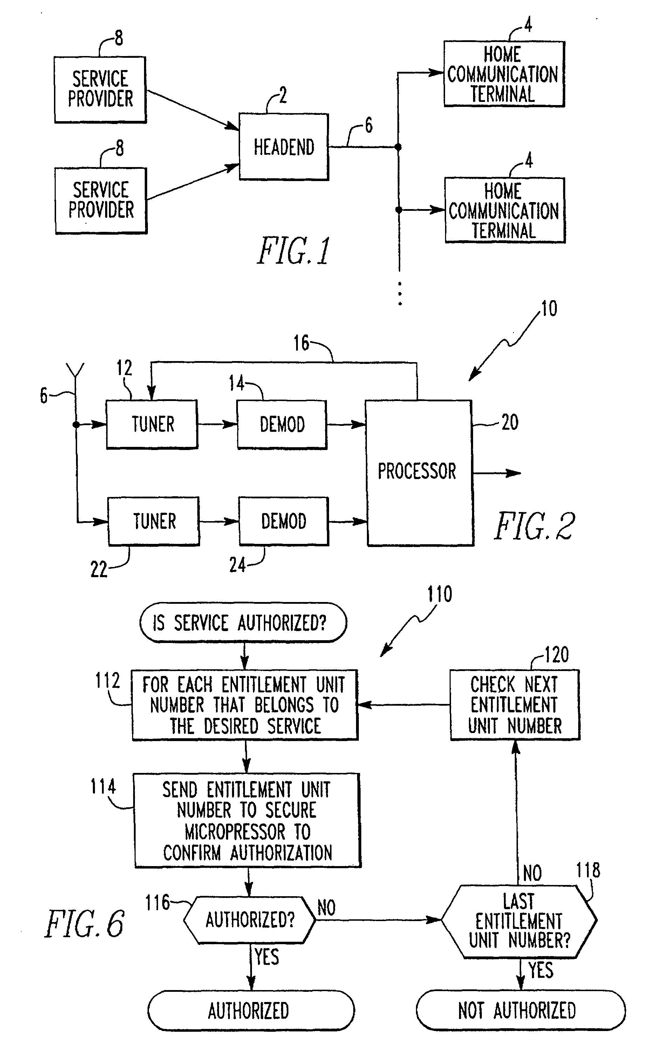

In FIG. 1, a conditional access communication system includes headend 2, a plurality of home communication terminals 4, and a link therebetween 6. The headend operator may receive content for transmission from a plurality of service providers 8.

In FIG. 2, terminal 10 (e.g., as included in home communications terminal 4) includes processor 20, tunable tuner 12, demodulator 14, and control link 16 to control the frequency of tunable tuner 12. Terminal 10 may also include second tuner 22 and demodulator 24 to receive "out of band" data streams.

In operation, headend operators provide a plurality of services. Usually each service is carried on a separate 6 MHZ channels. To receive a particular service, processor 20 directs tunable tuner 12 by control link 16 to tune to the frequency of the particular service desired. Demodulator 14 demodulates the tuned signal according to its modulation technique (e.g., PSK, QPSK (Quadrature Phase Shift Keying Modulation), Offset QPSK, etc.). Standards have been developed for carrying wideband video and audio information for a program (e.g., MPEG-2). However, some systems may carry non-MPEG (Moving Picture Experts Group) compliant signals (e.g., IP packets). When this occurs, terminal 10 may include second tuner 22 and demodulator 24 to recover non-MPEG compliant data. Both data streams are processed in processor 20, or separate but coupled processors may be provided.

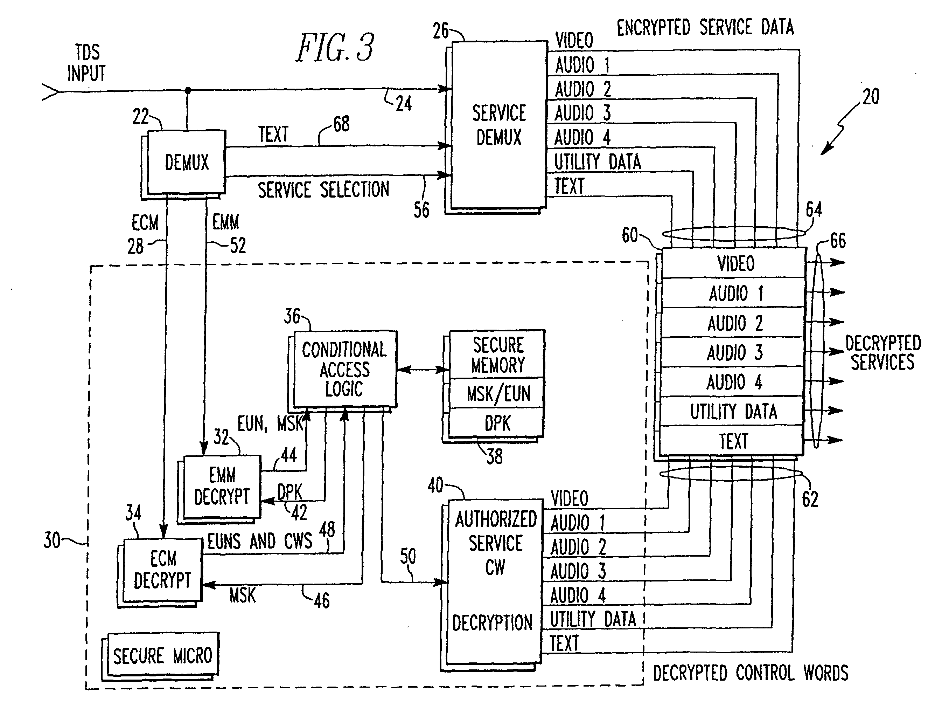

In FIG. 3, a more detailed description of processor 20 is depicted. Processor 20 includes secure microprocessor 30 and individual service decryptors 60. Processor 20 also includes demultiplexer 22 to cull encrypted and/or authenticated entitlement control message 28 from the transport data stream input and to cull encrypted entitlement management message 52 from the transport data stream input. Demultiplexer 22 also culls clear payload text 68 from the transport data stream which is provided to service demultiplexor 26. The transport data stream (TDS) is also provided at 24 to service demultiplexor 26 and may include video signals, a plurality of audio signals, or utility information. Any or all of these separate information data streams may be separately encrypted. If these information data streams are separately encrypted they will be decrypted, if authorized, in service decryptor 60 as discussed below.

Secure microprocessor 30 includes secure memory 38 that stores multi-session key (MSK), entitlement unit number and a decoder private key (DPK). Secure microprocessor 30 also includes decryptor 32, decryptor and/or authenticator 34, conditional access logic 36 and authorized control word decryptors 40. Decryptors 32 and 40, decryptor and/or authenticator 34 and conditional access logic 36 may advantageously be implemented in a general purpose arithmetic/logic section and program memory section (having a program stored therein) of secure microprocessor 30. Secure microprocessor 30 is characterized by memory 38 being unobservable at the input/output terminals of secure microprocessor 30. Thus, any intermediate unencrypted data may be stored in memory 38 (preferably non-volatile) without being observable by pirates. Data transferred into or out of secure microprocessor 30 is preferably protected at the terminals of microprocessor 30 by encryption if the data is long lived or remains unprotected if the data is so short lived that its observation by a pirate is harmless. For example, multi-session key is preferably stable for a period of hours to a month or so. Thus, it is preferably encrypted. In contrast, control words that are decrypted in secure microprocessor 30 from encrypted entitlement control messages typically change every 2 to 5 seconds so that observation of the control word by a pirate does not seriously compromise the system's security.

When entitlement control messages are transported in the transport data stream in encrypted form, a pirate is unable to observe the entitlement unit numbers and control words contained in the entitlement control message. However, the entitlement control message may also be transported in authenticated form (e.g., keyed secure hash). In authenticated form, the entitlement control message includes two parts: a clear text part and a hashed part. The entitlement control message is authenticated in authenticator 34 of secure microprocessor 30 (FIG. 3) by hashing the clear text part and comparing it to the hashed part of the entitlement control message. If they agree, then the entitlement control message is authenticated. A pirate may be able to observe the clear text part of the entitlement control message; however, if a pirate were to attempt to insert an additional entitlement unit number into the entitlement control message, the comparison of the hashed part and the results of the local hashing will fail. This reveals a modification of the entitlement control message, and the modified message is ignored.

In operation, demultiplexor 22 culls encrypted entitlement management message 52 from the transport or "out of band" data stream and provides it to decryptor 32. Decoder private key is read from secure memory 38 passed through conditional access logic 36 to decryptor 32 where it is used to decrypt and/or authenticate entitlement management message 52. Decoder private key may be a secret key such as those used in the Data Encryption Standard (DES) algorithm or must be the private component of a public/private key pair such as those used in the RSA algorithm. The entitlement management message includes both authorized entitlement unit number to be stored in secure memory 38 and authorized multi-session key to be stored in secure memory 38. Multi-session key is changed from time to time, preferably monthly or more often. When a subscriber wishes to upgrade service and be authorized to receive additional services (e.g., change from HBO only to HBO and Cinemax), a new entitlement management message will be transmitted to the secure microprocessor so that a new entitlement unit number will be recovered by decryptor 32 and stored in secure memory 38.

Encrypted and/or authenticated entitlement control message 28 is culled from the transport data stream input and provided to decryptor and/or authenticator 34. Multi-session key is read from secure memory 38 and passed through conditional access logic 36 to decryptor and/or authenticator 34 at 46. Decryptor and/or authenticator 34 decrypts and/or authenticates the entitlement control message to reveal encrypted control words for each encypted component (e.g., video, audio, etc.) of the service being carried on the transport data stream and to reveal a list of all entitlement unit numbers to which the currently received service belongs. For example, a first entitlement unit may include both HBO and Cinemax, whereas a second entitlement unit may include only HBO. The entitlement control message for the HBO service (i.e., HBO data stream) would include both the first and second entitlement unit numbers.

Conditional access logic 36 compares the list of entitlement unit numbers from decryptor and/or authenticator 34 with the authorized entitlement unit number stored in secure memory 38. If there is a match, then the service may be received. Conditional access logic 36 will then pass the control words from the decrypted and/or authenticated entitlement control message to the decryptors 40. Control words for individually encrypted service components (e.g., video, audio, etc.) are passed to decryptor 40. In decryptor 40, the control words will be decrypted using the multi-session key to provide clear text versions of the control words, or "service seeds" 62.

Control words are characterized by frequent changes. Whereas, multi-session key may change as infrequently as once a month, control words may change every two to five seconds. The decrypted control words are provided by decryptor 40 at output terminals of secure microprocessor 30. Even if a pirate were to recover a decrypted control word, the decrypted control word is short lived so as to have substantially no value to the pirate.

Service selection data 56 from the decrypted contents from decryptor and/or authenticator 34 is provided to service demuliplexor 26 via control access logic 36. Selected services 64 are provided by service demultiplexor 26 to service decryptor 60 at 64 based on service selection 56. Service decryptor 60 processes encrypted services of the selected services 64 using seeds 62 to provide decrypted services 66.

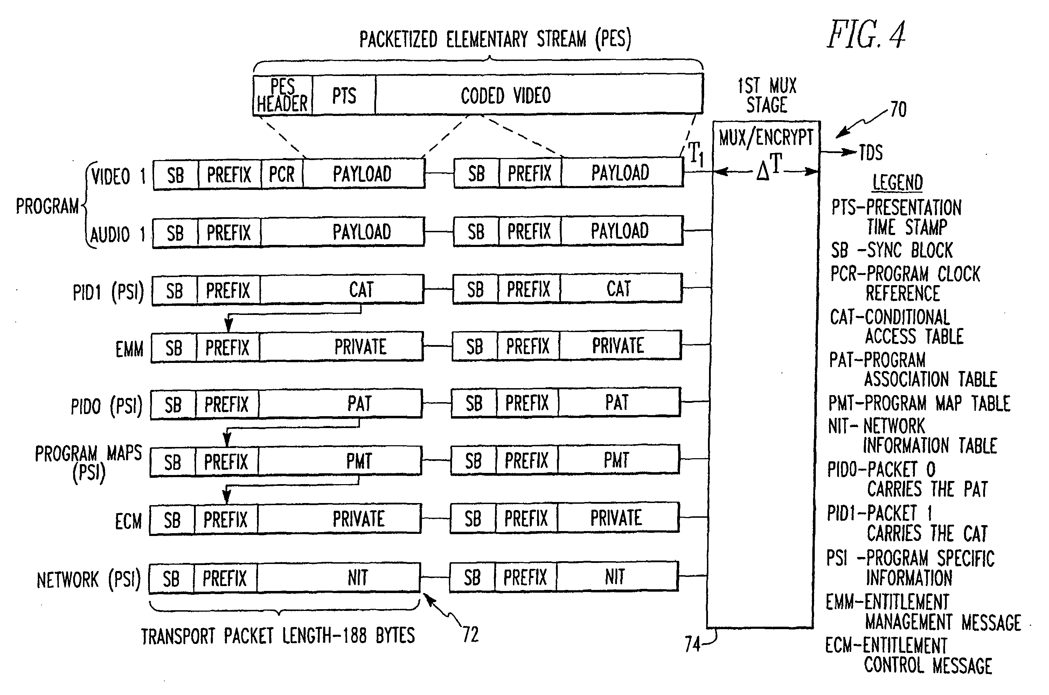

In FIG. 4, a representative transport data stream 70 (called a multiplex) is depicted. The transport data stream is packetized in packets of 188 bytes. Each packet includes a synchronization block and a prefix. Payload data may be concatenated between a plurality of transport packets to form a packetized elementary stream as depicted at the top of FIG. 4. One packetized elementary stream depicted at the bottom of FIG. 4 is the network information table (NIT). The network information table carries such information as a table of direct correspondence between a multiplex number and a frequency (for tuner 12 of FIG. 2) in which the data stream may be found.

Other information may be provided with the network information table. For example, entitlement unit table (EUT) in which each service, identified by universal service identification number (USID) is included together with each entitlement unit number to which the service belongs. Alternatively, the entitlement unit table may be transported "out of band" and received in processor 20 via tuner 22 and demodulator 24 (FIG. 2).

Similarly, in order to aid a user to select a desired service, service information may be provided over a permanently available data link (e.g., a data link not switched with the selected program) as either "in band" or "out of band" data. For example, an out of band data link may be a 108 MHz phase shift keyed (e.g., QPSK) broadcast data link. In band might be specific data packets in the data stream at a predetermined initial tuned frequency. Permanently available in band data link data might also be data packets carried in the data stream of all tunable frequencies. Such service information provides a list of services (i.e., universal service identification numbers) corresponding to each data stream number. Preferably, additional text is carried with the service information for each service so as to enable the terminal to include a electronic program guide.

In FIG. 4, program association table (PAT) is carried as payload data in packet 0 of multiplex 70. The program association table includes a list of each program available and a corresponding packet number at which program map table (PMT) may be found. There is a program map table for each program. The program map table includes a list of each component of the program (e.g., audio and video, entitlement control messages, etc.) and a packet number at which the program component (e.g., audio, video, entitlement control messages, etc.) may be found. Of particular importance is the program component that is the entitlement control message since it specifies all entitlement unit numbers to which the program belongs. The program map table includes information directing where the entitlement control message for that program may be found. This enables demultiplexor 22 (FIG. 3) to cull the encrypted entitlement control message 28 from the transport data stream.

Also of importance is conditional access table (CAT) found in packet 1 of multiplex 70 (FIG. 4). The conditional access table has for each system type of secure microprocessor (e.g., 30 in FIG. 3) in the system, a packet identification number where the encrypted entitlement management messages may be found. This packet number enables demultiplexor 22 to cull the encrypted entitlement management message 52 from the transport data stream (FIG. 3). Further filtering based on the address of the secure micro-processor may then be performed.

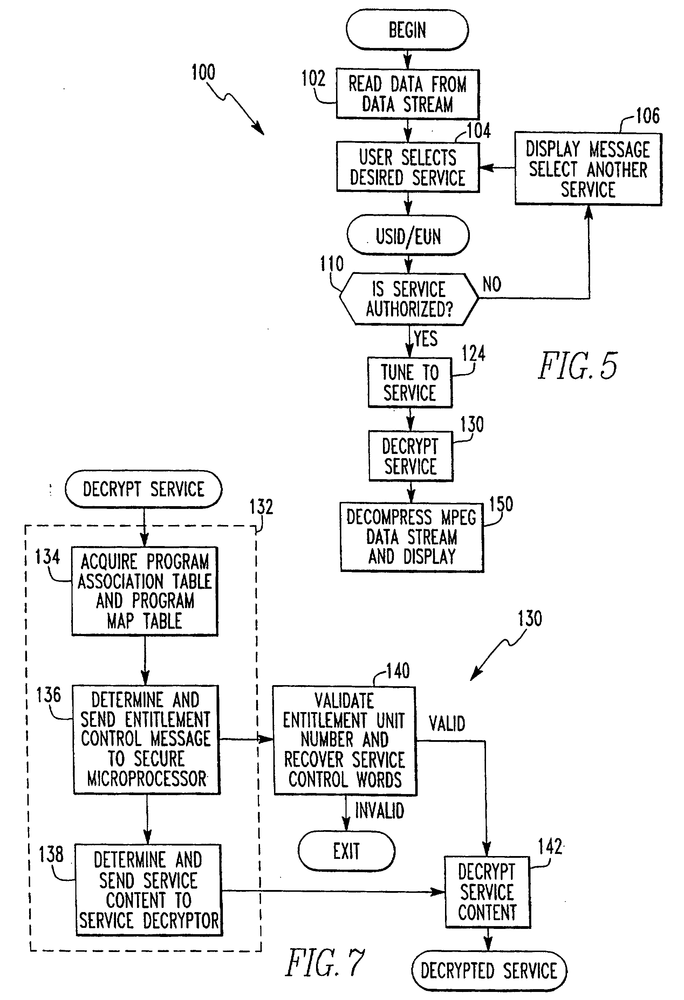

In FIG. 5, method 100 for determining whether a terminal is authorized to receive a service is practiced in processor 20 (FIG. 2). At step 102 data is read from the data stream. This data includes the entitlement unit table and the service information. At step 104, a user selects a desired service associated with a universal service identification number (e.g., as may be used with an electronic program guide). This may be accomplished through any of the known electronic program guide techniques. The entitlement unit table from the network information helps translate the universal service identification number into entitlement unit numbers that belong to the service. At step 110, the secure microprocessor pre-confirms whether the authorized entitlement unit number stored in secure memory 38 (FIG. 3) is a member of the entitlement unit numbers in the entitlement unit table that corresponds to the selected service. If it is not a member, at step 106, a message may be displayed to the user (e.g., displayed on a television style monitor) and the user will be requested to select another service. Alternatively, the terminal may automatically step to the next service, or to any predetermined service such as a barker channel.

It will be noted that a service pirate may attempt to add extra entitlement unit numbers to the entitlement unit table. However, based on the present invention, the pirate will still be unable to recover the service.

When it is determined at step 110 that a service is authorized, at step 124, tuner 12 is directed to tune to the desired service. This information comes from the network information table that associates the universal service identification number with the frequency on which the service may be received. After tuner 12 tunes to the correct frequency, demodulator 14 recovers the digital data stream carried at the tuned frequency. At step 130 (FIG. 5), the digital data stream is decrypted. At step 150, the decrypted digital data stream is decompressed (e.g., decompression from the compressed MPEG format) and then displayed to the user.

Step 110 (FIG. 5) is further described with reference to FIG. 6. The entitlement unit table has a list of all entitlement unit numbers that carry the specified service. In a loop that includes steps 112, 114, 116, 118 and 120, all entitlement unit numbers from the entitlement unit table are tested. At step 112, the first (and in later iterations the next) entitlement unit number belonging to the selected service is read from the entitlement unit table. At step 114, the entitlement unit number from the entitlement unit table is sent to the secure microprocessor to be compared to the authorized entitlement unit number stored in secure memory 38 (FIG. 3). If the comparison is favorable, then the service is declared authorized at step 116, and the tuner tunes to the service (step 124, FIG. 5). If the comparison is unfavorable, then at step 118, a test is made to determined whether all entitlement unit numbers from the entitlement unit table have been tested. If all entitlement unit numbers from the entitlement unit table have been tested and none has been the authorized entitlement unit number stored in secure memory 38, then the service is declared not authorized. However, if there are still more entitlement unit numbers from the entitlement unit table to be tested, then the next entitlement unit number is read in steps 120 and 112, and the loop is repeated.

This pre-tuning testing procedure has human factors benefits. Subscribers who tend to "surf' through the channels will tend to grow impatient if the time required to produce a display exceeds 1 second, and this delay will be relatively unnoted if the time to produce the display is less than 1/4 of a second. If is therefore desirable to provide a quick way to determine whether a service is authorized or unauthorized before tuner 12 is directed to tune to a particular frequency. It should be noted that the entitlement unit table may not be, and is not required for this purpose, to be secure. It may be sent unencrypted.

In FIG. 7, decrypting the service in step 130 is described in more detail. Processor 20 preferably includes a general purpose microprocessor performing step 132. Step 132 includes acquiring program association table and program map table at step 134.

At step 136, the general purpose microprocessor directs demultiplexor 22 to cull the encrypted and/or authenticated entitlement control message 28 (FIG. 3) from multiplex 70 (FIG. 4). The encrypted and/or entitlement control message is then sent to secure microprocessor 30 (FIG. 3) to be decrypted and/or authenticated.

At step 140, the encrypted and/or authenticated entitlement control message is decrypted and/or authenticated in the secure microprocessor, and the authorized entitlement unit number stored in secure memory 38 (FIG. 3) is compared to the list of entitlement unit numbers to which the present desired service belongs as listed in the decrypted and/or authenticated entitlement control message. This confirmation process takes place after tuner 12 tunes to the desired frequency. Since the entitlement control message is encrypted and/or authenticated, a pirate would not be able to insert false entitlement unit numbers into the entitlement control message without be detected.

When it is confirmed that the authorized entitlement unit number (stored in secure memory 38) is the same as one of the entitlement unit numbers carried in the entitlement control message, one or more control words are recovered from the entitlement control message. These control words correspond to each individual component of the service and are provided at 50 to decryptor 40 (FIG. 3). The control words are decrypted using multi-session key in decryptor 40 to provide seeds for decryption of service components in service decryptor 60.

In step 138 (FIG. 7), service selection data 56 (FIG. 3) from the decrypted and/or authenticated entitlement control message is used by service demultiplexor 26 (FIG. 3) to pass encrypted service component data 64 (e.g., audio or video) to service decryptor 60. In step 142 (FIG. 7), service decryptor 60 decrypts the encrypted service component data 64 using decrypted control words as seeds 62 from decryptor 40 to provide decrypted service components 66 (FIG. 3).

Thus, before tuner 12 (FIG. 2) is tuned, an initial fast, albeit possibly unsecured, determination is made as to whether the selected service is authorized as one of the services covered by the authorized entitlement unit number stored in secure memory 38. If the selected service appears to be an authorized service, then tuner 12 is tuned to the specified frequency and the transport data stream from that specified frequency is processed. In the transport data stream corresponding to the specified frequency is an encrypted and/or authenticated entitlement control message. It is this entitlement control message that is decrypted and/or verified in secure microprocessor 30 in order to reveal, in a secure environment, the entitlement unit numbers that belong to the service. The secure microprocessor compares the list of entitlement unit numbers from the entitlement control message against the authorized entitlement unit number in memory 38 in order to determine whether the service reception is authorized in a secure microprocessor unobservable to pirates.

Since decryption is not required prior to tuning, the pre-tuning steps are performed with great dispatch. A pirate may be able to insert false entitlement unit numbers into the entitlement unit table, but not into the encrypted entitlement control message. Even though a pirate may insert a false entitlement control message into the data stream, it will not be an authenticated entitlement control message, The authentication process carried out in authenticator 34 (FIG. 3) will reveal the deception and the false entitlement control message will be disregared. Thus, all that a pirate can accomplish is a slowing of the speed at which a user may surf through the channels.

In another embodiment, entitlement control messages are located by index. Entitlement control messages are sent in the MPEG transport stream to provide conditional access information for a given MPEG program. In this embodiment, all entitlement control messages for a given MPEG program are packed into one MPEG PID stream. This reduces the bandwidth required to transmit the entitlement control messages. Separate entitlement control messages are still associated with respective elementary streams (e.g., video or audio) by use of the stream_index discussed below.

Entitlement control messages bearing MPEG packets are mapped to the program elements (e.g., video and each audio data stream) of an MPEG program using a conditional access descriptor (CA_descriptor) as elementary stream (ES) information in the program level of the transport stream program map section. The CA_descriptor identifies the entitlement control message PID that carries all of the conditional access entitlement control messages pertaining to the elementary stream associated with the extended ES information. The CA_descriptor carried in the program map table used as extended ES information includes: a descriptor_tag, a descriptor_length, a CA_system_ID, a CA_PID, and an ECM_information_descriptor. The descriptor_tag is preferably an 8 bit field defined by MPEG standards to be 0x09 indicating that the CA_descriptor is for a conditional access system. The descriptor_length is preferably an 8 bit field representing the number of bytes (or bits, etc.) of the present CA_descriptor. The CA_system_ID is preferably a 16 bit field identifying the particular conditional access system to which the CA_descriptor pertains. There may be more than one. The CA_PID is preferably a 13 bit field carrying the PID value of the entitlement control message bearing packets for the associated elementary stream. The ECM_information_descriptor preferably includes one or more 24 bit fields (the number depends on descriptor_length, above) where each 24 bit field includes: an ECM_descriptor_tag, an ECM_descriptor_length, and a stream_index. The ECM_descriptor_tag is an 8 bit field that identifies a characteristic of the associated entitlement control message, for example, identifying the entitlement control message as a stream type descriptor (other descriptor types being possible). The ECM_descriptor_length is an 8 bit field that merely identifies the remaining length of the current ECM_information_descriptor (in bytes). The stream_index is an 8 bit field that identifies the entitlement control messages in a multiple entitlement control message stream that contain information pertaining to the elementary stream associated with the CA_descriptor.

Entitlement control messages for all elementary streams (e.g., video, audio, etc.) of a given program are packed into packets identified by one PID. For example, assume that an MPEG program has (1) a video stream identified by PID 100, an audio stream identified by PID 200, and an entitlement control message stream identified by PID 300. PID 300 contains entitlement control messages used by both the video and audio data streams. The entitlement control messages for each elementary stream are assigned arbitrary but unique and preferred sequential stream index values. For example, entitlement control messages for the video stream (PID 100) may be assigned a stream_index value of 25, and entitlement control messages for the audio stream (PID 200) may be assigned a stream_index value of 50.

The information contained in the transport stream program map table is used to link entitlement control messages to the correct elementary stream. The CA_descriptor (described above) is looked up in the program map table when the program is selected. For the present example, the program map table identifies the video stream as PID 100 and the audio stream as PID 200. The program map table identified the CA_descriptor which in turn identifies the CA_system_ID, the CA_PID as 300 (in this example) and the stream_index for the video as 25 and for audio as 50 as discussed above. Thus, home communication terminal 4 (FIG. 1) can identify the PID of the video and audio streams from program map table. Further, home communications terminal identifies one PID (using the CA_descriptor discussed above) for all entitlement control messages associated with the present program. However, it is still possible to maintain separate entitlement control messages for each elementary stream by using the stream_index (as discussed above) for each separate elementary stream.

Having described preferred embodiments of a novel apparatus and method for the encapsulation of entitlement authorization in a conditional access system (which are intended to be illustrative and not limiting), it is noted that modifications and variations can be made by persons skilled in the art in light of the above teachings. It is therefore to be understood that changes may be made in the particular embodiments of the invention disclosed which are within the scope of the invention as defined by the appended claims.

Having thus described the invention with the details and particularity required by the patent laws, what is claimed and desired protected by Letters Patent is set forth in the appended claims.

## Claims

1. Method of determining whether a terminal (10) of a conditional access system in which a user selects a service, the selected service being associated with a frequency and the terminal having a tuner (12), is authorised to receive the selected service, the method comprising the steps of:
receiving at least one encrypted entitlement control message (28) corresponding to the service;
**characterised by**
decrypting each of the at least one encrypted entitlement control message (28) in a secure element (30) having at least one authorised entitlement unit number stored therein, each decrypted entitlement control message revealing at least one first entitlement number associated with the selected service; and
determining that the terminal is authorised to receive the selected service when any first entitlement number of any decrypted entitlement control message represents any number of the at least one authorised entitlement unit number.

2. The method of claim 1, further comprising initial steps of:
receiving over a permanently available link (6) an entitlement unit table associating the selected service with at least one second entitlement number;
tuning the tuner (12) of the terminal to the frequency associated with the selected service when any of said at least one second entitlement number represents any number of said at least one authorised entitlement unit number.

3. The method of claim 2, wherein the step of receiving over a permanently available data link includes receiving the entitlement unit table over an out of band data link.

4. The method of claim 2, wherein the step of receiving over a permanently available link includes receiving the entitlement unit table incorporated in a data packet that is included in a data stream (70) associated with an initial power on frequency that is tunable by the tuner (12).

5. The method of claim 2, wherein the step of receiving over a permanently available link includes receiving the entitlement unit table incorporated in a data packet that is included in a data stream (70) associated with each frequency that is tunable by the tuner (12).

6. The method of claim 1, wherein the step of decrypting the at least one encrypted entitlement control message (28) includes recovering at least one control word (50) associated with decryption of a video component of the selected service.

7. The method of claim 1, wherein the step of decrypting the at least one encrypted entitlement control message (28) includes recovering at least one control word (50) associated with decryption of an audio component of the selected service.

8. The method of claim 1, wherein the step of receiving at least one encrypted entitlement control message (28) includes demultiplexing an output of the tuner (12) to recover a data component corresponding to the selected service, the data component containing the encrypted entitlement control message.

9. The method of claim 1, wherein the step of decrypting said at least one encrypted entitlement control message includes recovering at least one control word from said at least one decrypted entitlement control message (28), each control word being a decryption key for decrypting a corresponding service component of the selected service.

10. The method of claim 9, further comprising steps of:
recovering a first encrypted service component; and
decrypting the encrypted service component using a first control word of said at least one control word.

11. The method of claim 1, further comprising steps of:
receiving an encrypted entitlement management message (52) addressed to the terminal; and
decrypting the encrypted entitlement management message in the secure element (30), the decrypted entitlement management message including an update of at least one authorised entitlement unit number to be stored in the secure element.

12. The method of claim 11, wherein the step of receiving an encrypted entitlement management message (52) includes receiving the encrypted entitlement management message (52) over an out of band data link.

13. The method of claim 11, wherein the step of receiving an encrypted entitlement management message (52) includes receiving the encrypted entitlement management message incorporated in a data packet that is included in a data stream (70) associated with each frequency that is tunable by the tuner (12).

14. The method of claim 1, further comprising steps of:
receiving an entitlement management message (52) addressed to the terminal; and
authenticating the entitlement management message in the secure element, the authenticated entitlement management message including an update of at least one authorised entitlement unit number to be stored in the secure element.

15. The method of claim 14, wherein the step of receiving an entitlement management message (52) includes receiving the entitlement management message over an out of band data link.

16. The method of claim 14, wherein the step of receiving an entitlement management message (52) includes receiving the entitlement management message incorporated in a data packet that is included in a data stream associated with each frequency that is tunable by the tuner (12).

17. Method of determining whether a terminal (10) of a conditional access system in which a user selects a service, the selected service being associated with a frequency and the terminal having a tuner (12), is authorised to receive the selected service, the method comprising the steps of:
receiving at least one encrypted entitlement control message (28) corresponding to the service;
**characterised by**
authenticating each of the at least one entitlement control message in a secure element (30) having at least one authorised entitlement unit number stored therein, each authenticated entitlement control message having at least one first entitlement number associated with the selected service; and
determining that the terminal is authorised to receive the selected service when any first entitlement number of any authenticated entitlement control message represents any number of the at least one authorised entitlement unit number.

18. The method of claim 17, further comprising initial steps of:
receiving over a permanently available link an entitlement unit table associating the selected service with at least one second entitlement number;
tuning the tuner (12) of the terminal (10) to the frequency associated with the selected service when any of said at least one second entitlement number represents any number of said at least one authorised entitlement unit number.

19. The method of claim 18, wherein the step of receiving over a permanently available data link includes receiving the entitlement unit table over an out of band data link.

20. The method of claim 18, wherein the step of receiving over a permanently available link includes receiving the entitlement unit table incorporated in a data packet that is included in a data stream (70) associated with an initial power on frequency that is tunable by the tuner (12).

21. The method of claim 18, wherein the step of receiving over a permanently available link includes receiving the entitlement unit table incorporated in a data packet that is included in a data stream (70) associated with each frequency that is tunable by the tuner (12).

22. The method of claim 17, wherein the step of authenticating the at least one entitlement control message (28) includes recovering at least one control word associated with decryption of a video component of the selected service.

23. The method of claim 17, wherein the step of authenticating the at least one entitlement control message (28) includes recovering at least one control word associated with decryption of an audio component of the selected service.

24. The method of claim 17, wherein the step of receiving at least one entitlement control message (28)includes demodulating an output of the tuner (12) to recover a data component corresponding to the selected service, the data component containing the entitlement control message.

25. The method of claim 17, wherein the step of authenticating said at least one entitlement control message (28) includes recovering at least one control word from said at least one entitlement control message, each control word being a decryption key for decrypting a corresponding service component of the selected service.

26. The method of claim 25, further comprising steps of:
recovering a first encrypted service component; and
decrypting the encrypted service component using a first control word of said at least one control word.

27. The method of claim 17, further comprising steps of:
receiving an encrypted entitlement management message (52) addressed to the terminal; and
decrypting the encrypted entitlement management message in the secure element, the decrypted entitlement management message including an update of at least one authorised entitlement unit number to be stored in the secure element.

28. The method of claim 27, wherein the step of receiving an encrypted entitlement management message (52) includes receiving the encrypted entitlement management message over an out of band data link.

29. The method of claim 27, wherein the step of receiving an encrypted entitlement management message (52) includes receiving the encrypted entitlement management message incorporated in a data packet that is included in a data stream associated with each frequency that is tunable by the tuner (12).

30. The method of claim 17, further comprising steps of:
receiving an entitlement management message (52) addressed to the terminal (10); and
authenticating the entitlement management message in the secure element, the authenticated entitlement management message including an update of at least one authorised entitlement unit number to be stored in the secure element.

31. The method of claim 30, wherein the step of receiving an entitlement management message (52) includes receiving the entitlement management message over an out of band data link.

32. The method of claim 30, wherein the step of receiving an entitlement management message (52) includes receiving the entitlement management message incorporated in a data packet that is included in a data stream (70) associated with each frequency that is tunable by the tuner (12).

33. A conditional access apparatus for a terminal (10) of a conditional access system, the terminal including a tuner (12) and a selector for selecting a service, the selected service being identified by a corresponding service number and frequency, the apparatus comprising:
a processor (20) having plural control modules, a first control module (22) controlling the processor to receive at least one encrypted entitlement control message (28) corresponding to the selected service;
**characterised in that** said apparatus further comprises
a secure element (30) having at least one authorised entitlement unit number stored therein and having plural control modules, a second control module (34)controlling the secure element to decrypt each of the at least one encrypted entitlement control message (28), each decrypted entitlement control message revealing at least one first entitlement number associated with the selected service, a third control module controlling the secure element to determine that the terminal is authorised to receive the selected service when any first entitlement number of any decrypted entitlement control message represents any number of the at least one authorised entitlement unit number.

34. The apparatus of claim 33, wherein:
the processor (20) further includes a fourth control module controlling the processor to receive over a permanently available link an entitlement unit table associating the selected service with at least one second entitlement number; and
the processor (20) further includes a fifth control module controlling the processor to tune the tuner (12) of the terminal (10) to the frequency associated with the selected service when any of said at least one second entitlement number represents any number of said at least one authorised entitlement unit number.

35. The apparatus of claim 34, wherein the fourth control module includes a control module to receive the entitlement unit table over an out of band data link.

36. The apparatus of claim 34, wherein the fourth control module includes a control module to receive the entitlement unit table incorporated in a data packet that is included in a data stream associated with an initial power on frequency that is tunable by the tuner (12).

37. The apparatus of claim 34, wherein the fourth control module includes a control module to receive the entitlement unit table incorporated in a data packet that is included in a data stream (70) associated with each frequency that is tunable by the tuner (12).

38. The apparatus of claim 33, wherein the second control modules (34) includes a control module to recover at least one control word associated with decryption of a video component of the selected service.

39. The apparatus of claim 33, wherein the second control module (34) includes a control module to recover at least one control word associated with decryption of an audio component of the selected service.

40. The apparatus of claim 33, wherein the first control module (22) includes a control module to demodulate an output of the tuner to recover a data component corresponding to the selected service, the data component containing the encrypted entitlement control message.

41. The apparatus of claim 33, wherein the second control module (34) includes a control module to recover at least one control word from said at least one decrypted entitlement control message (28), each control word being a decryption key for decrypting a corresponding service component of the selected service.

42. The apparatus of claim 41, further comprising:
a fourth control module to control the processor (20) to recover a first encrypted service component; and
a decryptor (60) to decrypt the encrypted service component using a first control word of said at least one control word.

43. The apparatus of claim 33, further comprising:
a fourth control module to control the processor to receive an encrypted entitlement management message (52) addressed to the terminal; and
a fifth control module (32) to control the secure element to decrypt the encrypted entitlement management message, the decrypted entitlement management message including an update of at least one authorised entitlement unit number to be stored in the secure element (30).

44. The apparatus of claim 43, wherein the fourth control module includes a control module to receive the encrypted entitlement management message (52) over an out of band data link.

45. The apparatus of claim 43, wherein the fourth control module includes a control module to receive the encrypted entitlement management message (52) incorporated in a data packet that is included in a data stream (70) associated with each frequency that is tunable by the tuner (12).

46. The apparatus of claim 33, further comprising:
a fourth control module to control the processor to receive an entitlement management message addressed to the terminal; and
a fifth control module to control the secure element (30) to authenticate the entitlement management message (52), the authenticated entitlement management message including an update of at least one authorised entitlement unit number to be stored in the secure element (30).

47. The apparatus of claim 46, wherein the fourth control module includes a control module to receive the entitlement management message (52) over an out of band data link.

48. The apparatus of claim 46, wherein the fourth control module includes a control module to receive the entitlement management message (52) incorporated in a data packet that is included in a data stream associated with each frequency that is tunable by the tuner (12).

49. A conditional access apparatus for a terminal (10) of a conditional access system, the terminal including a tuner (12) and a selector for selecting a service, the selected service being identified by a corresponding service number and frequency, the apparatus comprising:
a processor (20) having plural control modules, a first control module (22) controlling the processor to receive at least one encrypted entitlement control message (28) corresponding to the selected service;
**characterised in that** said apparatus further comprises
a secure element (30) having at least one authorised entitlement unit number stored therein and having plural control modules,
a second control module (34) controlling the secure element (30) to authenticate each 'of the at least one entitlement control message (28), each entitlement control message having at least one first entitlement number associated with the selected service, and
a third control module controlling the secure element to determine that the terminal is authorised to receive the selected service when any first entitlement number of any authenticated entitlement control message represents any number of the at least one authorised entitlement unit number.

50. The apparatus of claim 49, wherein:
the processor (20) further includes a fourth control module controlling the processor to receive over a permanently available link an entitlement unit table associating the selected service with at least one second entitlement number; and
the processor (20) further includes a fifth control module controlling the processor to tune the tuner of the terminal to the frequency associated with the selected service when any of said at least one second entitlement number represents any number of said at least one authorised entitlement unit number.

51. The apparatus of claim 50, wherein the fourth control module includes a control module to receive the entitlement unit table over an out of band data link.

52. The apparatus of claim 50, wherein the fourth control module includes a control module to receive the entitlement unit table incorporated in a data packet that is included in a data stream associated with an initial power on frequency that is tunable by the tuner (12).

53. The apparatus of claim 50, wherein the fourth control module includes a control module to receive the entitlement unit table incorporated in a data packet that is included in a data stream associated with each frequency that is tunable by the tuner (12).

54. The apparatus of claim 49, wherein the second control module (34) includes a control module to recover at least one control word associated with decryption of a video component of the selected service.

55. The apparatus of claim 49, wherein the second control module (34) includes a control module to recover at least one control word associated with decryption of an audio component of the selected service.

56. The apparatus of claim 49, wherein the first control module (22) includes a control module to demodulate an output of the tuner (12) to recover a data component corresponding to the selected service, the data component containing the entitlement control message (28).

57. The apparatus of claim 49, wherein the second control module (34) includes a control module to recover at least one control word from said at least one entitlement control message (28), each control word being a decryption key for decrypting a corresponding service component of the selected service.

58. The apparatus of claim 57, further comprising:
a fourth control module to control the processor to recover a first encrypted service component; and
a decryptor to decrypt the encrypted service component using a first control word of said at least one control word.

59. The apparatus of claim 49, further comprising:
a fourth control module to control the processor to receive an encrypted entitlement management message (52) addressed to the terminal (10); and
a fifth control module to control the secure element to decrypt the encrypted entitlement management message (52), the decrypted entitlement management message including an update of at least one authorised entitlement unit number to be stored in the secure element.

60. The apparatus of claim 59, wherein the fourth control module includes a control module to receive the encrypted entitlement management message (52) over an out of band data link.

61. The apparatus of claim 59, wherein the fourth control module includes a control module to receive the encrypted entitlement management message (52) incorporated in a data packet that is included in a data stream (70) associated with each frequency that is tunable by the tuner (12).

62. The apparatus of claim 49, further comprising:
a fourth control module to control the processor to receive an entitlement management message (52) addressed to the terminal (10); and
a fifth control module to control the secure element to authenticate the entitlement management message, the authenticated entitlement management message including an update of at least one authorised entitlement unit number to be stored in the secure element.

63. The apparatus of claim 62, wherein the fourth control module includes a control module to receive the entitlement management message (52) over an out of band data link.

64. The apparatus of claim 62, wherein the fourth control module includes a control module to receive the entitlement management message (52) incorporated in a data packet that is included in a data stream (70) associated with each frequency that is tunable by the tuner (12).

## Patentansprüche

1. Verfahren zum Feststellen, ob ein Terminal (10) eines Systems mit bedingtem Zugriff, bei dem ein Nutzer einen Dienst wählt, wobei der gewählte Dienst mit einer Frequenz verbunden ist und das Terminal einen Tuner (12) hat, zum Empfang des gewählten Dienstes autorisiert ist, wobei das Verfahren die Schritte
Empfangen mindestens einer kodierten Berechtigungskontrollnachricht (28), die dem Dienst entspricht,
**gekennzeichnet durch**
Dekodierung jeder der mindestens einen kodierten Berechtigungskontrollnachricht (28) in einem sicheren Element (30), das mindestens eine autorisierte Berechtigungseinheitsnummer hat, die dort gespeichert ist, wobei jede dekodierte Berechtigungskontrollnachricht mindestens eine erste Berechtigungsnummer, die mit dem gewählten Dienst verbunden ist, zeigt, und
Feststellen, dass das Terminal autorisiert ist, den gewählten Dienst zu empfangen, wenn eine erste Berechtigungsnummer einer dekodierten Berechtigungskontrollnachricht eine Nummer der mindestens einen autorisierten Berechtigungseinheitsnummer verkörpert, umfasst.

2. Verfahren nach Anspruch 1, das außerdem die Anfangsschritte
Empfangen einer Berechtigungseinheitstabelle, die den gewählten Dienst mit mindestens einer zweiten Berechtigungsnummer verbindet, über eine ständig verfügbare Zwischenleitung (6),
Abstimmen des Tuners (12) des Terminals auf die mit dem gewählten Dienst verbundene Frequenz, wenn eine der mindestens einen zweiten Berechtigungsnummer eine Nummer der mindestens einen autorisierten Berechtigungseinheitsnummer verkörpert,
umfasst.

3. Verfahren nach Anspruch 2, **dadurch gekennzeichnet, dass** der Schritt des Empfangens über eine ständig verfügbare Zwischenleitung das Empfangen der Berechtigungseinheitstabelle über eine Datenverbindung außerhalb des Bandes umfasst.

4. Verfahren nach Anspruch 2, **dadurch gekennzeichnet, dass** der Schritt des Empfangens über eine ständig verfügbare Zwischenleitung das Empfangen der Berechtigungseinheitstabelle umfasst, die in ein Datenpaket integriert ist, das in einem Datenstrom (70) enthalten ist, der mit einer Anfangsleistung auf der mit dem Tuner (12) abstimmbaren Frequenz verbunden ist.

5. Verfahren nach Anspruch 2, **dadurch gekennzeichnet, dass** der Schritt des Empfangens über eine ständig verfügbare Zwischenleitung das Empfangen der Berechtigungseinheitstabelle umfasst, die in ein Datenpaket integriert ist, das in einem Datenstrom (70) enthalten ist, der mit jeder mit dem Tuner (12) abstimmbaren Frequenz verbunden ist.

6. Verfahren nach Anspruch 1, **dadurch gekennzeichnet, dass** der Schritt des Dekodierens der mindestens einen kodierten Berechtigungskontrollnachricht (28) das Regenerieren mindestens eines Kontrollworts (50) umfasst, das mit der Dekodierung einer Video-Komponente des gewählten Dienstes verbunden ist.

7. Verfahren nach Anspruch 1, **dadurch gekennzeichnet, dass** der Schritt des Dekodierens der mindestens einen kodierten Berechtigungskontrollnachricht (28) das Wiederherstellen mindestens eines Kontrollworts (50) umfasst, das mit der Dekodierung einer Audio-Komponente des gewählten Dienstes verbunden ist.

8. Verfahren nach Anspruch 1, **dadurch gekennzeichnet, dass** der Schritt des Empfangens der mindestens einen kodierten Berechtigungskontrollnachricht (28) das Entschachteln eines Ausgangssignals des Tuners (12) umfasst, um eine dem gewählten Dienst entsprechende Datenkomponente wiederherzustellen, wobei die Datenkomponente die kodierte Berechtigungskontrollnachricht enthält.

9. Verfahren nach Anspruch 1, **dadurch gekennzeichnet, dass** der Schritt des Dekodierens der mindestens einen kodierten Berechtigungskontrollnachricht das Wiederherstellen mindestens eines Kontrollworts aus der mindestens einen dekodierten Berechtigungskontrollnachricht (28) umfasst, wobei jedes Kontrollwort ein Dekodierungsschlüssel zum Dekodieren einer entsprechenden Dienstkomponente des gewählten Dienstes ist.

10. Verfahren nach Anspruch 9, das außerdem die Schritte
Wiederherstellen einer ersten kodierten Dienstkomponente und
Dekodieren der kodierten Dienstkomponente unter Verwendung eines ersten Kontrollworts des mindestens einen Kontrollworts
umfasst.

11. Verfahren nach Anspruch 1, das außerdem die Schritte
Empfangen einer kodierten Berechtigungsverwaltungsnachricht (52), die an das Terminal adressiert ist, und
Dekodieren der kodierten Berechtigungsverwaltungsnachricht im sicheren Element (30), wobei die dekodierte Berechtigungsverwaltungsnachricht eine Aktualisierung mindestens einer autorisierten Berechtigungseinheitsnummer aufweist, die in dem sicheren Element gespeichert werden soll,
umfasst.

12. Verfahren nach Anspruch 11, **dadurch gekennzeichnet, dass** der Schritt des Empfangens einer kodierten Berechtigungsverwaltungsnachricht (52) das Empfangen der kodierten Berechtigungsverwaltungsnachricht (52) über eine Datenverbindung außerhalb des Bandes umfasst.

13. Verfahren nach Anspruch 11, **dadurch gekennzeichnet, dass** der Schritt des Empfangens einer kodierten Berechtigungsverwaltungsnachricht (52) das Empfangen der kodierten Berechtigungsverwaltungsnachricht umfasst, die in ein Datenpaket integriert ist, das in einem Datenstrom (70) enthalten ist, der mit jeder mit dem Tuner (12) abstimmbaren Frequenz verbunden ist.

14. Verfahren nach Anspruch 1, das außerdem die Schritte
Empfangen einer Berechtigungsverwaltungsnachricht (52), die an das Terminal adressiert ist, und
Authentifizieren der Berechtigungsverwaltungsnachricht in dem sicheren Element, wobei die authentifizierte Berechtigungsverwaltungsnachricht eine Aktualisierung mindestens einer autorisierten Berechtigungseinheitsnummer aufweist, die in dem sicheren Element gespeichert werden soll,
umfasst.

15. Verfahren nach Anspruch 14, **dadurch gekennzeichnet, dass** der Schritt des Empfangens einer Berechtigungsverwaltungsnachricht (52) das Empfangen der Berechtigungsverwaltungsnachricht über eine Datenverbindung außerhalb des Bandes umfasst.

16. Verfahren nach Anspruch 14, **dadurch gekennzeichnet, dass** der Schritt des Empfangens einer Berechtigungsverwaltungsnachricht (52) das Empfangen der Berechtigungsverwaltungsnachricht umfasst, die in ein Datenpaket integriert ist, das in einem Datenstrom enthalten ist, der mit jeder mit dem Tuner (12) abstimmbaren Frequenz verbunden ist.

17. Verfahren zum Feststellen, ob ein Terminal (10) eines Systems mit bedingtem Zugriff, bei dem ein Nutzer einen Dienst wählt, wobei der gewählte Dienst mit einer Frequenz verbunden ist und das Terminal einen Tuner (12) hat, autorisiert ist, den gewählten Dienst zu empfangen, wobei das Verfahren die Schritte
Empfangen mindestens einer kodierten Berechtigungskontrollnachricht (28), die dem Dienst entspricht,
**gekennzeichnet durch**
Authentifizierung jeder der mindestens einen Berechtigungskontrollnachricht in einem sicheren Element (30), das mindestens eine autorisierte Berechtigungseinheitsnummer hat, die dort gespeichert ist, wobei jede authentifizierte Berechtigungskontrollnachricht mindestens eine erste Berechtigungsnummer hat, die mit dem gewählten Dienst verbunden ist, und
Feststellen, dass das Terminal autorisiert ist, den gewählten Dienst zu empfangen, wenn eine erste Berechtigungsnummer einer authentifizierten Berechtigungskontrollnachricht eine Nummer der mindestens einen autorisierten Berechtigungseinheitsnummer verkörpert,
umfasst.

18. Verfahren nach Anspruch 17, das außerdem die Anfangsschritte
Empfangen einer Berechtigungseinheitstabelle, die den gewählten Dienst mit mindestens einer zweiten Berechtigungsnummer verbindet, über eine ständig verfügbare Zwischenleitung,
Abstimmen des Tuners (12) des Terminals (10) auf die mit dem gewählten Dienst verbundene Frequenz, wenn eine der mindestens einen zweiten Berechtigungsnummer eine Nummer der mindestens einen autorisierten Berechtigungseinheitsnummer verkörpert,
umfasst.

19. Verfahren nach Anspruch 18, **dadurch gekennzeichnet, dass** der Schritt des Empfangens über eine ständig verfügbare Zwischenleitung das Empfangen der Berechtigungseinheitstabelle über eine Datenverbindung außerhalb des Bandes umfasst.

20. Verfahren nach Anspruch 18, **dadurch gekennzeichnet, dass** der Schritt des Empfangens über eine ständig verfügbare Zwischenleitung das Empfangen der Berechtigungseinheitstabelle umfasst, die in ein Datenpaket integriert ist, das in einem Datenstrom (70) enthalten ist, der mit einer Anfangsleistung auf der mit dem Tuner (12) abstimmbaren Frequenz verbunden ist.

21. Verfahren nach Anspruch 18, **dadurch gekennzeichnet, dass** der Schritt des Empfangens über eine ständig verfügbare Zwischenleitung das Empfangen der Berechtigungseinheitstabelle umfasst, die in ein Datenpaket integriert ist, das in einem Datenstrom (70) enthalten ist, der mit jeder mit dem Tuner (12) abstimmbaren Frequenz verbunden ist.

22. Verfahren nach Anspruch 17, **dadurch gekennzeichnet, dass** der Schritt des Authentifizierens der mindestens einen Berechtigungskontrollnachricht (28) das Wiederherstellen mindestens eines Kontrollworts umfasst, das mit der Dekodierung einer Video-Komponente des gewählten Dienstes verbunden ist.

23. Verfahren nach Anspruch 17, **dadurch gekennzeichnet, dass** der Schritt des Authentifizierens der mindestens einen Berechtigungskontrollnachricht (28) das Wiederherstellen mindestens eines Kontrollworts umfasst, das mit der Dekodierung einer Audio-Komponente des gewählten Dienstes verbunden ist.

24. Verfahren nach Anspruch 17, **dadurch gekennzeichnet, dass** der Schritt des Empfangens der mindestens einen Berechtigungskontrollnachricht (28) das Demodulieren eines Ausgangssignals des Tuners (12) umfasst, um eine dem gewählten Dienst entsprechende Datenkomponente wiederherzustellen, wobei die Datenkomponente die Berechtigungskontrollnachricht enthält.

25. Verfahren nach Anspruch 17, **dadurch gekennzeichnet, dass** der Schritt des Authentifizierens der mindestens einen Berechtigungskontrollnachricht (28) das Wiederherstellen mindestens eines Kontrollworts aus der mindestens einen Berechtigungskontrollnachricht umfasst, wobei jedes Kontrollwort ein Dekodierungsschlüssel zum Dekodieren einer entsprechenden Dienstkomponente des gewählten Dienstes ist.

26. Verfahren nach Anspruch 25, das außerdem die Schritte
Wiederherstellen einer ersten kodierten Dienstkomponente und
Dekodieren der kodierten Dienstkomponente unter Verwendung eines ersten Kontrollworts des mindestens einen Kontrollworts
umfasst.

27. Verfahren nach Anspruch 17, das außerdem die Schritte
Empfangen einer kodierten Berechtigungsverwaltungsnachricht (52), die an das Terminal adressiert ist, und
Dekodieren der kodierten Berechtigungsverwaltungsnachricht in dem sicheren Element, wobei die dekodierte Berechtigungsverwaltungsnachricht eine Aktualisierung mindestens einer autorisierten Berechtigungseinheitsnummer aufweist, die in dem sicheren Element gespeichert werden soll, umfasst.

28. Verfahren nach Anspruch 27, **dadurch gekennzeichnet, dass** der Schritt des Empfangens einer kodierten Berechtigungsverwaltungsnachricht (52) das Empfangen der kodierten Berechtigungsverwaltungsnachricht über eine Datenverbindung außerhalb des Bandes umfasst.

29. Verfahren nach Anspruch 27, **dadurch gekennzeichnet, dass** der Schritt des Empfangens einer kodierten Berechtigungsverwaltungsnachricht (52) das Empfangen der kodierten Berechtigungsverwaltungsnachricht umfasst, die in ein Datenpaket integriert ist, das in einem Datenstrom enthalten ist, der mit jeder mit dem Tuner (12) abstimmbaren Frequenz verbunden ist.

30. Verfahren nach Anspruch 17, das außerdem die Schritte
Empfangen einer Berechtigungsverwaltungsnachricht (52), die an das Terminal (10) adressiert ist, und
Authentifizieren der Berechtigungsverwaltungsnachricht in dem sicheren Element, wobei die authentifizierte Berechtigungsverwaltungsnachricht eine Aktualisierung mindestens einer autorisierten Berechtigungseinheitsnummer aufweist, die in dem sicheren Element gespeichert werden soll,
umfasst.

31. Verfahren nach Anspruch 30, **dadurch gekennzeichnet, dass** der Schritt des Empfangens einer Berechtigungsverwaltungsnachricht (52) das Empfangen der Berechtigungsverwaltungsnachricht über eine Datenverbindung außerhalb des Bandes umfasst.

32. Verfahren nach Anspruch 30, **dadurch gekennzeichnet, dass** der Schritt des Empfangens einer Berechtigungsverwaltungsnachricht (52) das Empfangen der Berechtigungsverwaltungsnachricht umfasst, die in ein Datenpaket integriert ist, das in einem Datenstrom (70) enthalten ist, der mit jeder mit dem Tuner (12) abstimmbaren Frequenz verbunden ist.

33. Vorrichtung mit bedingtem Zugriff für ein Terminal (10) eines Systems mit bedingtem Zugriff, wobei das Terminal einen Tuner (12) und einen Wähler zum Wählen eines Dienstes aufweist, wobei der gewählte Dienst durch eine entsprechende Dienstnummer und Frequenz identifiziert wird, wobei die Vorrichtung
einen Prozessor (20) aufweist, der mehrere Steuermodule hat, wobei ein erstes Steuermodul (22) den Prozessor steuert, um mindestens eine kodierte Berechtigungskontrollnachricht (28) zu empfangen, die dem gewählten Dienst entspricht,
**dadurch gekennzeichnet, dass** die Vorrichtung außerdem
ein sicheres Element (30) aufweist, das mindestens eine dort gespeicherte autorisierte Berechtigungseinheitsnummer und mehrere Steuermodule hat, wobei ein zweites Steuermodul (34) das sichere Element steuert, um jede der mindestens einen kodierten Berechtigungskontrollnachricht (28) zu dekodieren, wobei jede dekodierte Berechtigungskontrollnachricht mindestens eine erste Berechtigungsnummer zeigt, die mit dem gewählten Dienst verbunden ist, wobei ein drittes Steuermodul das sichere Element steuert, um festzustellen, dass das Terminal autorisiert ist, den gewählten Dienst zu empfangen, wenn eine erste Berechtigungsnummer einer dekodierten Berechtigungskontrollnachricht eine Nummer der mindestens einen autorisierten Berechtigungseinheitsnummer verkörpert.

34. Vorrichtung nach Anspruch 33, **dadurch gekennzeichnet, dass**
der Prozessor (20) außerdem ein viertes Steuermodul aufweist, das den Prozessor steuert, um über eine ständig verfügbare Zwischenleitung eine Berechtigungseinheitstabelle zu empfangen, die den gewählten Dienst mit mindestens einer zweiten Berechtigungsnummer verbindet, und
der Prozessor (20) außerdem ein fünftes Steuermodul aufweist, das den Prozessor steuert, um den Tuner (12) des Terminals (10) auf die Frequenz abzustimmen, die mit dem gewählten Dienst verbunden ist, wenn eine der mindestens einen zweiten Berechtigungsnummer eine Nummer der mindestens einen autorisierten Berechtigungseinheitsnummer verkörpert.

35. Vorrichtung nach Anspruch 34, **dadurch gekennzeichnet, dass** das vierte Steuermodul ein Steuermodul aufweist, um die Berechtigungseinheitstabelle über eine Datenverbindung außerhalb des Bandes zu empfangen.

36. Vorrichtung nach Anspruch 34, **dadurch gekennzeichnet, dass** das vierte Steuermodul ein Steuermodul aufweist, um die Berechtigungseinheitstabelle zu empfangen, die in ein Datenpaket integriert ist, das in einem Datenstrom enthalten ist, der mit einer Anfangsleistung auf der mit dem Tuner (12) abstimmbaren Frequenz verbunden ist.

37. Vorrichtung nach Anspruch 34, **dadurch gekennzeichnet, dass** das vierte Steuermodul ein Steuermodul aufweist, um die Berechtigungseinheitstabelle zu empfangen, die in ein Datenpaket integriert ist, das in einem Datenstrom (70) enthalten ist, der mit jeder mit dem Tuner (12) abstimmbaren Frequenz verbunden ist.

38. Vorrichtung nach Anspruch 33, **dadurch gekennzeichnet, dass** das zweite Steuermodul (34) ein Steuermodul aufweist, um mindestens ein Kontrollwort wiederherzustellen, das mit der Dekodierung einer Video-Komponente des gewählten Dienstes verbunden ist.

39. Vorrichtung nach Anspruch 33, **dadurch gekennzeichnet, dass** das zweite Steuermodul (34) ein Steuermodul aufweist, um mindestens ein Kontrollwort wiederherzustellen, das mit der Dekodierung einer Audio-Komponente des gewählten Dienstes verbunden ist.

40. Vorrichtung nach Anspruch 33, **dadurch gekennzeichnet, dass** das erste Steuermodul (22) ein Steuermodul aufweist, um ein Ausgangssignal des Tuners zu demodulieren, um eine dem gewählten Dienst entsprechende Datenkomponente wiederherzustellen, wobei die Datenkomponente die kodierte Berechtigungskontrollnachricht enthält.

41. Vorrichtung nach Anspruch 33, **dadurch gekennzeichnet, dass** das zweite Steuermodul (34) ein Steuermodul aufweist, um mindestens ein Kontrollwort aus der mindestens einen dekodierten Berechtigungskontrollnachricht (28) wiederherzustellen, wobei jedes Kontrollwort ein Dekodierungsschlüssel zum Dekodieren einer entsprechenden Dienstkomponente des gewählten Dienstes ist.

42. Vorrichtung nach Anspruch 41, die außerdem
ein viertes Steuermodul, um den Prozessor (20) zu steuern, um eine erste kodierte Dienstkomponente wiederherzustellen, und
einen Dekodierer (60), um die kodierte Dienstkomponente unter Verwendung eines ersten Kontrollworts des mindestens einen Kontrollworts zu dekodieren,
aufweist.

43. Vorrichtung nach Anspruch 33, die außerdem
ein viertes Steuermodul, um den Prozessor zu steuern, um eine kodierte Berechtigungsverwaltungsnachricht (52), die an das Terminal adressiert ist, zu empfangen, und
ein fünftes Steuermodul (32), um das sichere Element zu steuern, um die kodierte Berechtigungsverwaltungsnachricht zu dekodieren, wobei die dekodierte Berechtigungsverwaltungsnachricht eine Aktualisierung mindestens einer autorisierten Berechtigungseinheitsnummer aufweist, die in dem sicheren Element (30) gespeichert werden soll,
aufweist.

44. Vorrichtung nach Anspruch 43, **dadurch gekennzeichnet, dass** das vierte Steuermodul ein Steuermodul aufweist, um eine kodierte Berechtigungsverwaltungsnachricht (52) über eine Datenverbindung außerhalb des Bandes zu empfangen.

45. Vorrichtung nach Anspruch 43, **dadurch gekennzeichnet, dass** das vierte Steuermodut ein Steuermodul aufweist, um die kodierte Berechtigungsverwaltungsnachricht (52) zu empfangen, die in ein Datenpaket integriert ist, das in einem Datenstrom (70) enthalten ist, der mit jeder mit dem Tuner (12) abstimmbaren Frequenz verbunden ist.

46. Vorrichtung nach Anspruch 33, die außerdem
ein viertes Steuermodul, um den Prozessor zu steuern, um eine Berechtigungsverwaltungsnachricht, die an das Terminal adressiert ist, zu empfangen, und
ein fünftes Steuermodul, um das sichere Element (30) zu steuern, um die Berechtigungsverwaltungsnachricht (52) zu authentifizieren, wobei die authentifizierte Berechtigungsverwaltungsnachricht eine Aktualisierung mindestens einer autorisierten Berechtigungseinheitsnummer aufweist, die in dem sicheren Element (30) gespeichert werden soll,
aufweist.

47. Vorrichtung nach Anspruch 46, **dadurch gekennzeichnet, dass** das vierte Steuermodul ein Steuermodul aufweist, um die Berechtigungsverwaltungsnachricht (52) über eine Datenverbindung außerhalb des Bandes zu empfangen.

48. Vorrichtung nach Anspruch 46, **dadurch gekennzeichnet, dass** das vierte Steuermodul ein Steuermodul aufweist, um die Berechtigungsverwaltungsnachricht (52) zu empfangen, die in ein Datenpaket integriert ist, das in einem Datenstrom enthalten ist, der mit jeder mit dem Tuner (12) abstimmbaren Frequenz verbunden ist.

49. Vorrichtung mit bedingtem Zugriff für ein Terminal (10) eines Systems mit bedingtem Zugriff, wobei das Terminal einen Tuner (12) und einen Wähler zum Wählen eines Dienstes aufweist, wobei der gewählte Dienst durch eine entsprechende Dienstnummer und Frequenz identifiziert wird, wobei die Vorrichtung
einen Prozessor (20) aufweist, der mehrere Steuermodule hat, wobei ein erstes Steuermodul (22) den Prozessor steuert, um mindestens eine kodierte Berechtigungskontrollnachricht (28), die dem gewählten Dienst entspricht, zu empfangen,
**dadurch gekennzeichnet, dass** die Vorrichtung außerdem
ein sicheres Element (30), das mindestens eine dort gespeicherte autorisierte Berechtigungseinheitsnummer und mehrere Steuermodule hat,
ein zweites Steuermodul (34), das das sichere Element (30) steuert, um jede der mindestens einen Berechtigungskontrollnachricht (28) zu authentifizieren, wobei jede Berechtigungskontrollnachricht mindestens eine erste Berechtigungsnummer hat, die mit dem gewählten Dienst verbunden ist,
und ein drittes Steuermodul, das das sichere Element steuert, um festzustellen, dass das Terminal autorisiert ist, den gewählten Dienst zu empfangen, wenn eine erste Berechtigungsnummer einer authentifizierten Berechtigungskontrollnachricht eine Nummer der mindestens einen autorisierten Berechtigungseinheitsnummer verkörpert,
aufweist.

50. Vorrichtung nach Anspruch 49, **dadurch gekennzeichnet, dass**
der Prozessor (20) außerdem ein viertes Steuermodul aufweist, das den Prozessor steuert, um über eine ständig verfügbare Zwischenleitung eine Berechtigungseinheitstabelle zu empfangen, die den gewählten Dienst mit mindestens einer zweiten Berechtigungsnummer verbindet, und
der Prozessor (20) außerdem ein fünftes Steuermodul aufweist, das den Prozessor steuert, um den Tuner des Terminals auf die Frequenz abzustimmen, die mit dem gewählten Dienst verbunden ist, wenn eine der mindestens einen zweiten Berechtigungsnummer eine Nummer der mindestens einen autorisierten Berechtigungseinheitsnummer verkörpert.

51. Vorrichtung nach Anspruch 50, **dadurch gekennzeichnet, dass** das vierte Steuermodul ein Steuermodul aufweist, um die Berechtigungseinheitstabelle über eine Datenverbindung außerhalb des Bandes zu empfangen.

52. Vorrichtung nach Anspruch 50, **dadurch gekennzeichnet, dass** das vierte Steuermodul ein Steuermodul aufweist, um die Berechtigungseinheitstabelle zu empfangen, die in ein Datenpaket integriert ist, das in einem Datenstrom enthalten ist, der mit einer Anfangsleistung auf der mit dem Tuner (12) abstimmbaren Frequenz verbunden ist.

53. Vorrichtung nach Anspruch 50, **dadurch gekennzeichnet, dass** das vierte Steuermodul ein Steuermodul aufweist, um die Berechtigungseinheitstabelle zu empfangen, die in ein Datenpaket integriert ist, das in einem Datenstrom enthalten ist, der mit jeder vom Tuner (12) abstimmbaren Frequenz verbunden ist.

54. Vorrichtung nach Anspruch 49, **dadurch gekennzeichnet, dass** das zweite Steuermodul (34) ein Steuermodul aufweist, um mindestens ein Kontrollwort wiederherzustellen, das mit der Dekodierung einer Video-Komponente des gewählten Dienstes verbunden ist.

55. Vorrichtung nach Anspruch 49, **dadurch gekennzeichnet, dass** das zweite Steuermodul (34) ein Steuermodul aufweist, um mindestens ein Kontrollwort wiederherzustellen, das mit der Dekodierung einer Audio-Komponente des gewählten Dienstes verbunden ist.

56. Vorrichtung nach Anspruch 49, **dadurch gekennzeichnet, dass** das erste Steuermodul (22) ein Steuermodul aufweist, um ein Ausgangssignal des Tuners (12) zu demodulieren, um eine dem gewählten Dienst entsprechende Datenkomponente wiederherzustellen, wobei die Datenkomponente die kodierte Berechtigungskontrollnachricht (28) enthält.

57. Vorrichtung nach Anspruch 49, **dadurch gekennzeichnet, dass** das zweite Steuermodul (34) ein Steuermodul aufweist, um mindestens ein Kontrollwort aus der mindestens einen dekodierten Berechtigungskontrollnachricht (28) wiederherzustellen, wobei jedes Kontrollwort ein Dekodierungsschlüssel zum Dekodieren einer entsprechenden Dienstkomponente des gewählten Dienstes ist.

58. Vorrichtung nach Anspruch 57, die außerdem
ein viertes Steuermodul, um den Prozessor zu steuern, um eine erste kodierte Dienstkomponente wiederherzustellen, und
einen Dekodierer, um die kodierte Dienstkomponente unter Verwendung eines ersten Kontrollworts des mindestens einen Kontrollworts zu dekodieren,
aufweist.

59. Vorrichtung nach Anspruch 49, die außerdem
ein viertes Steuermodul, um den Prozessor zu steuern, um eine kodierte Berechtigungsverwaltungsnachricht (52), die an das Terminal (10) adressiert ist, zu empfangen, und
ein fünftes Steuermodul, um das sichere Element zu steuern, um die kodierte Berechtigungsverwaltungsnachricht (52) zu dekodieren, wobei die dekodierte Berechtigungsverwaltungsnachricht eine Aktualisierung mindestens einer autorisierten Berechtigungseinheitsnummer aufweist, die in dem sicheren Element gespeichert werden soll,
aufweist.

60. Vorrichtung nach Anspruch 59, **dadurch gekennzeichnet, dass** das vierte Steuermodul ein Steuermodul aufweist, um eine kodierte Berechtigungsverwaltungsnachricht (52) über eine Datenverbindung außerhalb des Bandes zu empfangen.

61. Vorrichtung nach Anspruch 59, **dadurch gekennzeichnet, dass** das vierte Steuermodul ein Steuermodul aufweist, um die kodierte Berechtigungsverwaltungsnachricht (52) zu empfangen, die in ein Datenpaket integriert ist, das in einem Datenstrom (70) enthalten ist, der mit jeder mit dem Tuner (12) abstimmbaren Frequenz verbunden ist.

62. Vorrichtung nach Anspruch 49, die außerdem
ein viertes Steuermodul, um den Prozessor zu steuern, um eine Berechtigungsverwaltungsnachricht (52), die an das Terminal (10) adressiert ist, zu empfangen, und
ein fünftes Steuermodul, um das sichere Element zu steuern, um die Berechtigungsverwaltungsnachricht zu authentifizieren, wobei die authentifizierte Berechtigungsverwaltungsnachricht eine Aktualisierung mindestens einer autorisierten Berechtigungseinheitsnummer aufweist, die in dem sicheren Element gespeichert werden soll,
aufweist.

63. Vorrichtung nach Anspruch 62, **dadurch gekennzeichnet, dass** das vierte Steuermodul ein Steuermodul aufweist, um die Berechtigungsverwaltungsnachricht (52) über eine Datenverbindung außerhalb des Bandes zu empfangen.

64. Vorrichtung nach Anspruch 62, **dadurch gekennzeichnet, dass** das vierte Steuermodul ein Steuermodul aufweist, um die Berechtigungsverwaltungsnachricht (52) zu empfangen, die in ein Datenpaket integriert ist, das in einem Datenstrom (70) enthalten ist, der mit jeder mit dem Tuner (12) abstimmbaren Frequenz verbunden ist.

## Revendications

1. Procédé de détermination du fait qu'un terminal (10) d'un système d'accès conditionnel dans lequel un utilisateur sélectionne un service, le service sélectionné étant associé à une fréquence et le terminal comportant un syntoniseur (12), est autorisé à recevoir le service sélectionné, le procédé comprenant les étapes consistant à :
recevoir au moins un message de commande d'habilitation crypté (28) correspondant au service,
**caractérisé par**
un décryptage de chaque message des au moins un message de commande d'habilitation cryptés (28) dans un élément sécurisé (30) comportant au moins un numéro d'unité d'habilitation autorisée mémorisé dans celui-ci, chaque message de commande d'habilitation décrypté révélant au moins un premier numéro d'habilitation associé au service sélectionné, et
la détermination de ce que le terminal est autorisé à recevoir le service sélectionné lorsqu'un premier numéro d'habilitation quelconque d'un quelconque message de commande d'habilitation décrypté représente un numéro quelconque parmi les au moins un numéro d'unité d'habilitation autorisée.

2. Procédé selon la revendication 1, comprenant en outre des étapes initiales consistant à :
recevoir sur une liaison disponible en permanence (6) une table d'unités d'habilitation associant le service sélectionné à au moins un second numéro d'habilitation,
accorder le syntoniseur (12) du terminal sur la fréquence associée au service sélectionné lorsque l'un quelconque desdits au moins un second numéro d'habilitation représente un numéro quelconque desdits au moins un numéro d'unité d'habilitation autorisée.

3. Procédé selon la revendication 2, dans lequel l'étape de réception sur une liaison de données disponible en permanence comprend la réception de la table d'unités d'habilitation sur une liaison de données hors bande.

4. Procédé selon la revendication 2, dans lequel l'étape de réception sur une liaison disponible en permanence comprend la réception de la table d'unités d'habilitation incorporée dans un paquet de données qui est inclus dans un flux de données (70), associé à une fréquence de mise sous tension initiale sur laquelle peut s'accorder le syntoniseur (12).

5. Procédé selon la revendication 2, dans lequel l'étape de réception sur une liaison disponible en permanence comprend la réception de la table d'unités d'habilitation incorporée dans un paquet de données qui est inclus dans un flux de données (70) associé à chaque fréquence sur laquelle peut s'accorder le syntoniseur (12).

6. Procédé selon la revendication 1, dans lequel l'étape de décryptage du au moins un message de commande d'habilitation crypté (28) comprend la récupération d'au moins un mot de commande (50) associé au décryptage d'un composant vidéo du service sélectionné.

7. Procédé selon la revendication 1, dans lequel l'étape du décryptage du au moins un message de commande d'habilitation crypté (28) comprend la récupération d'au moins un mot de commande (50) associé au décryptage d'un composant audio du service sélectionné.

8. Procédé selon la revendication 1, dans lequel l'étape de réception d'au moins un message de commande d'habilitation crypté (28) comprend un démultiplexage d'une sortie du syntoniseur (12) afin de récupérer un composant de données correspondant au service sélectionné, le composant de données contenant le message de commande d'habilitation crypté.

9. Procédé selon la revendication 1, dans lequel l'étape de décryptage dudit au moins un message de commande d'habilitation crypté comprend la récupération d'au moins un mot de commande à partir dudit au moins un message de commande d'habilitation décrypté (28), chaque mot de commande étant une clé de décryptage destinée à décrypter un composant de service correspondant du service sélectionné.

10. Procédé selon la revendication 9, comprenant en outre les étapes consistant à :
récupérer un premier composant de service crypté, et
décrypter le composant de service crypté en utilisant un premier mot de commande dudit au moins un mot de commande.

11. Procédé selon la revendication 1, comprenant en outre les étapes consistant à :
recevoir un message de gestion d'habilitation crypté (52) adressé au terminal, et
décrypter le message de gestion d'habilitation crypté dans l'élément sécurisé (30), le message de gestion d'habilitation décrypté comprenant une mise à jour d'au moins un numéro d'unité d'habilitation autorisée devant être mémorisé dans l'élément sécurisé.

12. Procédé selon la revendication 11, dans lequel l'étape de réception d'un message de gestion d'habilitation crypté (52) comprend la réception du message de gestion d'habilitation crypté (52) sur une liaison de données hors bande.

13. Procédé selon la revendication 11, dans lequel l'étape de réception d'un message de gestion d'habilitation crypté (52) comprend la réception du message de gestion d'habilitation crypté incorporé dans un paquet de données qui est inclus dans un flux de données (70) associé à chaque fréquence sur laquelle peut s'accorder le syntoniseur (12).

14. Procédé selon la revendication 1, comprenant en outre les étapes consistant à :
recevoir un message de gestion d'habilitation (52) adressé au terminal, et
authentifier le message de gestion d'habilitation dans l'élément sécurisé, le message de gestion d'habilitation authentifié comprenant une mise à jour d'au moins un numéro d'unité d'habilitation autorisée devant être mémorisé dans l'élément sécurisé.

15. Procédé selon la revendication 14, dans lequel l'étape de réception d'un message de gestion d'habilitation (52) comprend la réception du message de gestion d'habilitation sur une liaison de données hors bande.

16. Procédé selon la revendication 14, dans lequel l'étape de réception d'un message de gestion d'habilitation (52) comprend la réception du message de gestion d'habilitation incorporé dans un paquet de données qui est inclus dans un flux de données associé à chaque fréquence sur laquelle peut s'accorder le syntoniseur (12).

17. Procédé de détermination du fait qu'un terminal (10) d'un système d'accès conditionnel dans lequel un utilisateur sélectionne un service, le service sélectionné étant associé à une fréquence et le terminal comportant un syntoniseur (12), est autorisé à recevoir le service sélectionné, le procédé comprenant les étapes consistant à :
recevoir au moins un message de commande d'habilitation crypté (28) correspondant au service,
**caractérisé par**
une authentification de chacun des au moins un message de commande d'habilitation dans un élément sécurisé (30) comportant au moins un numéro d'unité d'habilitation autorisée mémorisé dans celui-ci, chaque message de commande d'habilitation authentifié comportant au moins un premier numéro d'habilitation associé au service sélectionné, et
la détermination de ce que le terminal est autorisé à recevoir le service sélectionné lorsqu'un premier numéro d'habilitation quelconque d'un message de commande d'habilitation authentifié représente un numéro quelconque parmi les au moins un numéro d'unité d'habilitation autorisée.

18. Procédé selon la revendication 17, comprenant en outre des étapes initiales consistant à :
recevoir sur une liaison disponible en permanence une table d'unités d'habilitation associant le service sélectionné à au moins un second numéro d'habilitation,
accorder le syntoniseur (12) du terminal (10) sur la fréquence associée au service sélectionné lorsque l'un quelconque desdits au moins un second numéro d'habilitation représente un numéro quelconque parmi lesdits au moins un numéro d'habilitation autorisée.

19. Procédé selon la revendication 18, dans lequel l'étape de réception sur une liaison de données disponible en permanence comprend la réception de la table d'unités d'habilitation sur une liaison de données hors bande.

20. Procédé selon la revendication 18, dans lequel l'étape de réception sur une liaison disponible en permanence comprend la réception de la table d'unités d'habilitation incorporée dans un paquet de données qui est inclus dans un flux de données (70) associé à une fréquence de mise sous tension initiale sur laquelle peut s'accorder le syntoniseur (12).

21. Procédé selon la revendication 18, dans lequel l'étape de réception sur une liaison disponible en permanence comprend la réception de la table d'unités d'habilitation incorporée dans un paquet de données qui est inclus dans un flux de données (70) associé à chaque fréquence sur laquelle peut s'accorder le syntoniseur (12).

22. Procédé selon la revendication 17, dans lequel l'étape d'authentification du au moins un message de commande d'habilitation (28) comprend la récupération d'au moins un mot de commande associé au décryptage d'un composant vidéo du service sélectionné.

23. Procédé selon la revendication 17, dans lequel l'étape d'authentification du au moins un message de commande d'habilitation (28) comprend la récupération d'au moins un mot de commande associé au décryptage d'un composant audio du service sélectionné.

24. Procédé selon la revendication 17, dans lequel l'étape de réception d'au moins un message de commande d'habilitation (28) comprend la démodulation d'une sortie du syntoniseur (12) afin de récupérer un composant de données correspondant au service sélectionné, le comprenant de données contenant le message de commande d'habilitation.

25. Procédé selon la revendication 17, dans lequel l'étape d'authentification du au moins un message de commande d'habilitation (28) comprend la récupération d'au moins un mot de commande depuis ledit au moins un message de commande d'habilitation, chaque mot de commande constituant une clé de décryptage destinée à décrypter un composant de service correspondant du service sélectionné.

26. Procédé selon la revendication 25, comprenant en outre les étapes consistant à :
récupérer un premier composant de service crypté, et
décrypter le composant de service crypté en utilisant un premier mot de commande dudit au moins un mot de commande.

27. Procédé selon la revendication 17, comprenant en outre les étapes consistant à :
recevoir un message de gestion d'habilitation crypté (52) adressé au terminal, et
décrypter le message de gestion d'habilitation crypté dans l'élément sécurisé, le message de gestion d'habilitation décrypté comprenant une mise à jour d'au moins un numéro d'unité d'habilitation autorisée devant être mémorisé dans l'élément sécurisé.

28. Procédé selon la revendication 27, dans lequel l'étape de réception d'un message de gestion d'habilitation crypté (52) comprend la réception du message de gestion d'habilitation crypté sur une liaison de données hors bande.

29. Procédé selon la revendication 27, dans lequel l'étape de réception d'un message de gestion d'habilitation crypté (52) comprend la réception du message de gestion d'habilitation crypté incorporé dans un paquet de données qui est inclus dans un flux de données associé à chaque fréquence sur laquelle peut s'accorder le syntoniseur (12).

30. Procédé selon la revendication 17, comprenant en outre les étapes consistant à :
recevoir un message de gestion d'habilitation (52) adressé au terminal (10), et
authentifier le message de gestion d'habilitation dans l'élément sécurisé, le message de gestion d'habilitation authentifié comprenant une mise à jour d'au moins un numéro d'unité d'habilitation autorisée devant être mémorisé dans l'élément sécurisé.

31. Procédé selon la revendication 30, dans lequel l'étape de réception d'un message de gestion d'habilitation (52) comprend la réception du message de gestion d'habilitation sur une liaison de données hors bande.

32. Procédé selon la revendication 30, dans lequel l'étape de réception d'un message de gestion d'habilitation (52) comprend la réception du message de gestion d'habilitation incorporé dans un paquet de données qui est inclus dans un flux de données (70) associé à chaque fréquence sur laquelle peut s'accorder le syntoniseur (12).

33. Dispositif d'accès conditionnel destiné à un terminal (10) d'un système d'accès conditionnel, le terminal comprenant un syntoniseur (12) et un sélecteur destiné à sélectionner un service, le service sélectionné étant identifié par un numéro de service et une fréquence correspondants, le dispositif comprenant :
un processeur (20) comportant plusieurs modules de commande, un premier module de commande (22) commandant le processeur pour recevoir au moins un message de commande d'habilitation crypté (28) correspondant au service sélectionné,
**caractérisé en ce que** ledit dispositif comprend en outre
un élément sécurisé (30) comportant au moins un numéro d'unité d'habilitation autorisée mémorisé dans celui-ci et comportant plusieurs modules de commande, un second module de commande (34) commandant l'élément sécurisé pour décrypter chacun des au moins un message de commande d'habilitation crypté (28), chaque message de commande d'habilitation décrypté révélant au moins un premier numéro d'habilitation associé au service sélectionné, un troisième module de commande commandant l'élément sécurisé pour déterminer que le terminal est autorisé à recevoir le service sélectionné lorsqu'un premier numéro d'habilitation quelconque d'un message de commande d'habilitation décrypté quelconque représente un numéro quelconque des au moins un numéro d'unité d'habilitation autorisée.

34. Dispositif selon la revendication 33, dans lequel :
le processeur (20) comprend en outre un quatrième module de commande commandant le processeur pour recevoir sur une liaison disponible en permanence une table d'unités d'habilitation associant le service sélectionné à au moins un second numéro d'habilitation, et
le processeur (20) comprend en outre un cinquième module de commande commandant le processeur pour accorder le syntoniseur (12) du terminal (10) sur la fréquence associée au service sélectionné lorsque l'un quelconque desdits au moins un second numéro d'habilitation représente un numéro quelconque desdits au moins un numéro d'unité d'habilitation autorisée.

35. Dispositif selon la revendication 34, dans lequel le quatrième module de commande comprend un module de commande destiné à recevoir la table d'unités d'habilitation sur une liaison de données hors bande.

36. Dispositif selon la revendication 34, dans lequel le quatrième module de commande comprend un module de commandé destiné à recevoir la table d'unités d'habilitation incorporée dans un paquet de données qui est inclus dans un flux de données associé à une fréquence de mise sous tension initiale sur laquelle peut s'accorder le syntoniseur (12).

37. Dispositif selon la revendication 34, dans lequel le quatrième module de commande comprend un module de commande destiné à recevoir la table d'unités d'habilitation incorporée dans un paquet de données qui est inclus dans un flux de données (70) associé à chaque fréquence sur laquelle peut s'accorder le syntoniseur (12).

38. Dispositif selon la revendication 33, dans lequel le second module de commande (34) comprend un module de commande pour récupérer au moins un mot de commande associé au décryptage d'un composant vidéo du service sélectionné.

39. Dispositif selon la revendication 33, dans lequel le second module de commande (34) comprend un module de commande destiné à récupérer au moins un mot de commande associé au décryptage d'un composant audio du service sélectionné.

40. Dispositif selon la revendication 33, dans lequel le premier module de commande (22) comprend un module de commande destiné à démoduler une sortie du syntoniseur afin de récupérer un composant de données correspondant au service sélectionné, le composant de données contenant le message de commande d'habilitation crypté.

41. Dispositif selon la revendication 33, dans lequel le second module de commande (34) comprend un module de commande destiné à récupérer au moins un mot de commande à partir desdits au moins un message de commande d'habilitation décrypté (28), chaque mot de commande étant une clé de décryptage destinée à décrypter un composant de service correspondant du service sélectionné.

42. Dispositif selon la revendication 41, comprenant en outre :
un quatrième module de commande destiné à commander le processeur (20) afin de récupérer un premier composant de service crypté, et
un décrypteur (60) destiné à décrypter le composant de service crypté en utilisant un premier mot de commande dudit au moins un mot de commande.

43. Dispositif selon la revendication 33, comprenant en outre :
un quatrième mot de commande destiné à commander le processeur pour recevoir un message de gestion d'habilitation crypté (52) adressé au terminal, et
un cinquième module de commande (32) destiné à commander l'élément sécurisé pour décrypter le message de gestion d'habilitation crypté, le message de gestion d'habilitation décrypté comprenant une mise à jour d'au moins un numéro d'unité d'habilitation autorisée devant être mémorisé dans l'élément sécurisé (30).

44. Dispositif selon la revendication 43, dans lequel le quatrième module de commande comprend un module de commande destiné à recevoir le message de gestion d'habilitation crypté (52) sur une liaison de données hors bande.

45. Dispositif selon la revendication 43, dans lequel le quatrième module de commande comprend un module de commande destiné à recevoir le message de gestion d'habilitation crypté (52) incorporé dans un paquet de données qui est inclus dans un flux de données (70) associé à chaque fréquence sur laquelle peut s'accorder le syntoniseur (12).

46. Dispositif selon la revendication 33, comprenant en outre :
un quatrième module de commande destiné à commander le processeur de façon à recevoir un message de gestion d'habilitation adressé au terminal, et
un cinquième module de commande destiné à commander l'élément sécurisé (30) afin d'authentifier le message de gestion d'habilitation (52), le message de gestion d'habilitation authentifié comprenant une mise à jour du au moins un numéro d'unité d'habilitation autorisée devant être mémorisé dans l'élément sécurisé (30).

47. Dispositif selon la revendication 46, dans lequel le quatrième module de commande comprend un module de commande destiné à recevoir le message de gestion d'habilitation (52) sur une liaison de données hors bande.

48. Dispositif selon la revendication 46, dans lequel le quatrième module de commande comprend un module de commande destiné à recevoir le message de gestion d'habilitation (52) incorporé dans un paquet de données qui est inclus dans un flux de données associé à chaque fréquence sur laquelle peut s'accorder le syntoniseur (12).

49. Dispositif d'accès conditionnel destiné à un terminal (10) d'un système d'accès conditionnel, le terminal comprenant un syntoniseur (12) et un sélecteur destiné à sélectionner un service, le service sélectionné étant identifié par un numéro de service et une fréquence correspondants, le dispositif comprenant :
un processeur (20) comportant plusieurs modules de commande, un premier module de commande (22) commandant le processeur de façon à recevoir au moins un message de commande d'habilitation crypté (28) correspondant au service sélectionné,
**caractérisé en ce que** ledit dispositif comprend en outre
un élément sécurisé (30) comportant au moins un numéro d'unité d'habilitation autorisé mémorisé dans celui-ci et comportant plusieurs modules de commande,
un second module de commande (34) commandant l'élément sécurisé (30) afin d'authentifier chacun des au moins un message de commande d'habilitation (28), chaque message de commande d'habilitation comportant au moins un premier numéro d'habilitation associé au service sélectionné, et
un troisième module de commande commandant l'élément sécurisé pour déterminer que le terminal est autorisé à recevoir le service sélectionné lorsqu'un premier numéro d'habilitation quelconque d'un quelconque message de commande d'habilitation authentifié représente un numéro quelconque des au moins un numéro d'unité d'habilitation autorisée.

50. Dispositif selon la revendication 49, dans lequel :
le processeur (20) comprend en outre un quatrième module de commande commandant le processeur de façon à recevoir sur une liaison disponible en permanence une table d'unités d'habilitation associant le service sélectionné à au moins un second numéro d'habilitation, et
le processeur (20) comprend en outre un cinquième module de commande commandant le processeur de façon à accorder le syntoniseur du terminal sur la fréquence associée au service sélectionné, lorsque l'un quelconque desdits au moins un second numéro d'habilitation représente un numéro quelconque desdits au moins un numéro d'unité d'habilitation autorisée.

51. Dispositif selon la revendication 50, dans lequel le quatrième module de commande comprend un module de commande destiné à recevoir la table d'unités d'habilitation sur une liaison de données hors bande.

52. Dispositif selon la revendication 50, dans lequel le quatrième module de commande comprend un module de commande destiné à recevoir la table d'unités d'habilitation incorporée dans un paquet de données qui est inclus dans un flux de données associé à une fréquence de mise sous tension initiale sur laquelle peut s'accorder le syntoniseur (12).

53. Dispositif selon la revendication 50, dans lequel le quatrième module de commande comprend un module de commande destiné à recevoir la table d'unités d'habilitation incorporée dans un paquet de données qui est inclus dans un flux de données associé à chaque fréquence sur laquelle peut s'accorder le syntoniseur (12).

54. Dispositif selon la revendication 49, dans lequel le second module de commande (34) comprend un module de commande destiné à récupérer au moins un mot de commande associé au décryptage d'un composant vidéo du service sélectionné.

55. Dispositif selon la revendication 49, dans lequel le second module de commande (34) comprend un module de commande afin de récupérer au moins un mot de commande associé au décryptage d'un composant audio du service sélectionné.

56. Dispositif selon la revendication 49, dans lequel le premier module de commande (22) comprend un module de commande destiné à démoduler une sortie du syntoniseur (12) afin de récupérer un composant de données correspondant au service sélectionné, le composant de données contenant le message de commande d'habilitation (28).

57. Dispositif selon la revendication 49, dans lequel le second module de commande (34) comprend un module de commande destiné à récupérer au moins un mot de commande à partir dudit au moins un message de commande d'habilitation (28), chaque mot de commande étant une clé de décryptage destinée à décrypter un composant de service correspondant du service sélectionné.

58. Dispositif selon la revendication 57, comprenant en outre :
un quatrième module de commande destiné à commander le processeur afin de récupérer un premier composant de service crypté, et
un décrypteur destiné à décrypter le composant de service crypté en utilisant un premier mot de commande desdits au moins un mot de commande.

59. Dispositif selon la revendication 49, comprenant en outre :
un quatrième module de commande destiné à commander le processeur pour recevoir un message de gestion d'habilitation crypté (52) adressé au terminal (10), et
un cinquième module de commande destiné à commander l'élément sécurisé afin de décrypter le message de gestion d'habilitation crypté (52), le message de gestion d'habilitation décrypté comprenant une mise à jour d'au moins un numéro d'unité d'habilitation autorisée devant être mémorisé dans l'élément sécurisé.

60. Dispositif selon la revendication 59, dans lequel le quatrième module de commande comprend un module de commande destiné à recevoir le message de gestion d'habilitation crypté (52) sur une liaison de données hors bande.

61. Dispositif selon la revendication 59, dans lequel le quatrième module de commande comprend un module de commande destiné à recevoir le message de gestion d'habilitation crypté (52) incorporé dans un paquet de données qui est inclus dans un flux de données (70) associé à chaque fréquence sur laquelle peut s'accorder le syntoniseur (12).

62. Dispositif selon la revendication 49, comprenant en outre :
un quatrième module de commande destiné à commander le processeur de façon à recevoir un message de gestion d'habilitation (52) adressé au terminal (10), et
un cinquième module de commande destiné à commander l'élément sécurisé afin d'authentifier le message de gestion d'habilitation, le message de gestion d'habilitation authentifié comprenant une mise à jour d'au moins un numéro d'unité d'habilitation autorisée devant être mémorisé dans l'élément sécurisé.

63. Dispositif selon la revendication 62, dans lequel le quatrième module de commande comprend un module de commande destiné à recevoir le message de gestion d'habilitation (52) sur une liaison de données hors bande.

64. Dispositif selon la revendication 62, dans lequel le quatrième module de commande comprend un module de commande destiné à recevoir le message de gestion d'habilitation (52) incorporé dans un paquet de données qui est inclus dans un flux de données (70) associé à chaque fréquence sur laquelle peut s'accorder le syntoniseur (12).
